**Europäisches Patentamt**

**European Patent Office**

**Office européen des brevets**

(11) Numéro de publication: **0 196 962**
**B1**

## (12) FASCICULE DE BREVET EUROPEEN

(45) Date de publication du fascicule du brevet:
**18.01.89**

(21) Numéro de dépôt: **86400572.3**

(22) Date de dépôt: **18.03.86**

(51) Int. Cl.⁴: **F 16 L 1/04,** B 65 H 59/22

(54) **Dispositif pour bloquer le défilement d'un élément allongé tel qu'un tuyau.**

(30) Priorité: **18.03.85 FR 8503951**

(43) Date de publication de la demande:
**08.10.86 Bulletin 86/41**

(45) Mention de la délivrance du brevet:
**18.01.89 Bulletin 89/3**

(84) Etats contractants désignés:
**DE FR GB IT NL**

(56) Documents cités:
**FR-A- 1 593 306**
**FR-A- 2 024 176**
**US-A- 3 975 919**

**"Der Hydraulik-Trainer", A. Schmitt, 2ème édition 1980,**
**G.L. Reseroth GmbH, Lohr am Main (DE), page 157**
**"L'hydraulique pratique commentée ...", CEP édition,**
**1982, Paris (FR), chapitre 22, pages 223 à 238**

(73) Titulaire: **COFLEXIP Société Anonyme, 23 Avenue de**
**Neuilly, F-75116 Paris (FR)**

(72) Inventeur: **Sciard, Alain Henri Joseph, 1, rue de**
**Chazelles, F-75017 Paris (FR)**

(74) Mandataire: **Nony, Michel et al, Cabinet NONY &**
**CIE 29, rue Cambacérès, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif pour bloquer le défilement d'un élément alongé tel qu'un tuyau ou un câble.

Le problème du blocage ou de l'arrêt du défilement suivant leur axe de charges telles que des tuyaux rigides ou flexibles, des câbles ou des chaînes se rencontre fréquemment lors de la pose en mer de tels éléments.

Ce blocage est généralement effectué à l'aide de dispositifs à mâchoires ou à coins qui présentent l'inconvénient de permettre un certain glissement de l'élément, et par conséquent de marquer ou de déformer les surfaces de l'élément à freiner.

On connaît également pour le document US-A-3 975 919 un dispositif permettant de maintenir bloqué un tel élément à l'arrêt mais ce dispositif ne saurait bloquer un élément en défilement sans l'endommager.

La présente invention vise à pallier ces inconvénients en fournissant un dispositif de blocage qui soit d'un fonctionnement très rapide et qui évite d'endommager la surface de l'élément bloqué.

A cet effet, l'invention a pour objet un dispositif pour bloquer le défilement d'un élément allongé tel qu'un tuyau ou un câble comprenant au moins un organe tel qu'un câble susceptible d'être enroulé en hélice autour de l'élément à bloquer et ayant ses extrémités montées chacune sur un châssis de support, et des moyens moteurs pour provoquer l'éloignement respectif des deux châssis dans une direction sensiblement parallèle au défilement, caractérisé par le fait que lesdits moyens moteurs comprennent au moins un accumulateur d'énergie susceptible de les actionner, de sorte qu'au moment où ledit organe vient en prise avec l'élément à bloquer, la vitesse de la partie avant de cet organe soit du même ordre ou supérieure à cette de l'élément.

L'organe enroulé en hélice peut être un câble, mais également, une chaîne, une corde une lame d'acier préformée en spirale..., l'essentiel étant que sa souplesse et son diamètre permettent de l'enrouler autour de l'élément à bloquer.

Pour permettre le défilement de l'élément allongé, il suffit de maintenir les deux châssis suffisamment rapprochés lun de l'autre de sorte que le câble enroule l'élément de façon lâche. En provoquant l'éloignement des deux châssis, il en résulte un serrement de l'élément allongé par le câble.

L'accumulateur d'énergie présente l'avantage de provoquer un écartement très rapide des châssis. On a en effet constaté que, d'une manière surprenante, on obtenait un blocage sans glissement, et par conséquent sans endommagement de la surface de l'élément à bloquer, à la condition qu'au moment où le câble vient en prise avec cet élément, la vitesse de la partie avant de ce câble soit du même ordre ou même supérieure à celle de l'élément. En d'autres termes, l'organe de blocage doit être lancé à une vitesse du même ordre ou supérieure à celle de l'élément à bloquer.

L'accumulateur d'énergie selon l'invention permet d'obtenir dans des conditions pratiques et économiques acceptables, une telle vitesse en un temps très court.

Dans un premier mode de réalisation de l'invention, lesdits moteurs comprennent des vérins disposés entre les deux châssis pour provoquer leur écartement, et par conséquent le serrement des câbles autour de l'élément à bloquer, l'accumulateur d'énergie comprenant au moins un réservoir d'air sous pression relié auxdits vérins.

Dans un autre mode de réalisation, lesdits moyens moteurs et accumulateurs d'énergie comprennent des moyens élastiques tels que des ressorts ou des vérins pneumatiques agencés pour écarter les deux châssis, un verrou étant prévu pour verrouiller les châssis dans une position où ils sont rapprochés l'un de l'autre, des vérins étant montés entre les châssis pour les rapprocher l'un de l'autre contre l'action des moyens élastiques.

Les vérins peuvent alors être moins importants que dans le mode de réalisation précédent, puisqu'ils ne provoquent pas la force de blocage elle-même, mais uniquement la force servant à précontraindre les ressorts. Le verrou, qui est de préférence un verrou pouvant être relâché très rapidement, permet de ne pas laisser les vérins sous tension pendant le défilement de l'élément allongé.

Dans un troisième mode de réalisation, les moyens moteurs et accumulateurs d'énergie sont constitués par l'action de la pesanteur sur le châssis aval.

L'un desdits châssis peut être monté fixe sur un bâti sur lequel est également monté au moins un rail de guidage sensiblement parallèle à la direction de défilement, et l'autre châssis est monté solidaire d'un chariot susceptible de coulisser sur ledit rail.

Dans ce cas, le bâti est par exemple monté de façon fixe sur un navire de pose de câbles sous-marins.

En variante, au moins le châssis aval dans le sens du défilement peut être porté par l'élément à bloquer, des moyens étant prévus pour retenir dans le sens du défilement le châssis amont.

Dans ce cas, au moins la partie aval du dispositif est ainsi montée flottante sur l'élément à bloquer, ce qui peut donner plus de souplesse à son utilisation. Bien entendu, le châssis amont dispose de moyens de retenue permettant de le fixer de façon amovible ou non en un point choisi.

Le châssis amont peut être soit monté fixe sur un bâti, soit être lui-même porté par l'élément à bloquer.

Dans cette variante, le ou les châssis portés par l'élément à bloquer peuvent être monté sur au moins un galet agencé pour coopérer avec ledit élément.

Ainsi, les châssis sont portés par l'élément à bloquer par l'intermédiaire de ce ou ces galets qui assurent un dévidement rapide, mais régulier et sans à-coups, de l'organe de blocage tel qu'un câble.

Lesdits châssis sont par exemple des châssis annulaires au travers desquels passe l'élément à bloquer.

Dans un mode de réalisation particulier de l'invention, le dispositif peut comprendre une pluralité d'éléments tels que des câbles enroulés dans les deux sens autour de l'élément à bloquer.

Cet agencement présente notamment l'avantage qu'aucun effort de rotation ne s'exerce entre les deux châssis.

Dans un autre mode de réalisation, les éléments tels que des câbles peuvent être constitués par une chaussette de retenue (organe également connu sous le nom de «chinese finger»).

Un patin peut être monté sur le châssis amont et disposé entre l'élément à freiner et l'organe tel qu'un câble, afin de reprendre une partie des efforts exercés sur cet organe.

Pour que l'effort de blocage se produise convenablement, ou bien ledit patin possède une longueur inférieure à la longueur de l'organe de blocage, ou bien le patin est réalisé en au moins deux parties longitudinalement escpacées et reliées par un élément élastique.

Lorsque l'élément à bloquer possède une section non circulaire, on prévoit de préférence des patins ayant une section complémentaire de celle de l'élément, afin de ne pas déformer ce dernier.

Un matériau souple peut être interposé entre l'organe enroulé en hélice et l'élément à bloquer afin d'augmenter la force de blocage et de limiter l'usure.

On décrira maintenant à titre d'exemples non limitatifs quelques modes de réalisation de l'invention en référence aux dessins schématiques annexés dans lesquels:

la figure 1 est une vue en perspective d'un premier mode de réalisation de l'invention, dans lequel l'accumulateur d'énergie a été omis pour plus de clarté,

la figure 2 est une vue à plus grande échelle du détail II de la figure 1,

la figure 3 est une vue du dessus du dispositif de figure 1,

la figure 4 est une vue en perspective éclaté d'un second mode de réalisation,

la figure 5 est une vue en perspective d'un troisième mode de réalisation dans lequel les moyens moteurs ont été omis,

la figure 6 est une vue en perspective d'un quatrième mode de réalisation,

la figure 7 est une vue à plus grande échelle du détail VII de la figure 6,

la figure 8 est une vue de côté représentant un autre mode de réalisation,

la figure 9 est une vue en coupe perpendiculairement à l'élément à bloquer d'un autre mode de réalisation,

la figure 10 est une vue de dessus très schématique d'un autre mode de réalisation, et

la figure 11 représente une variante du dispositif de la figure 10.

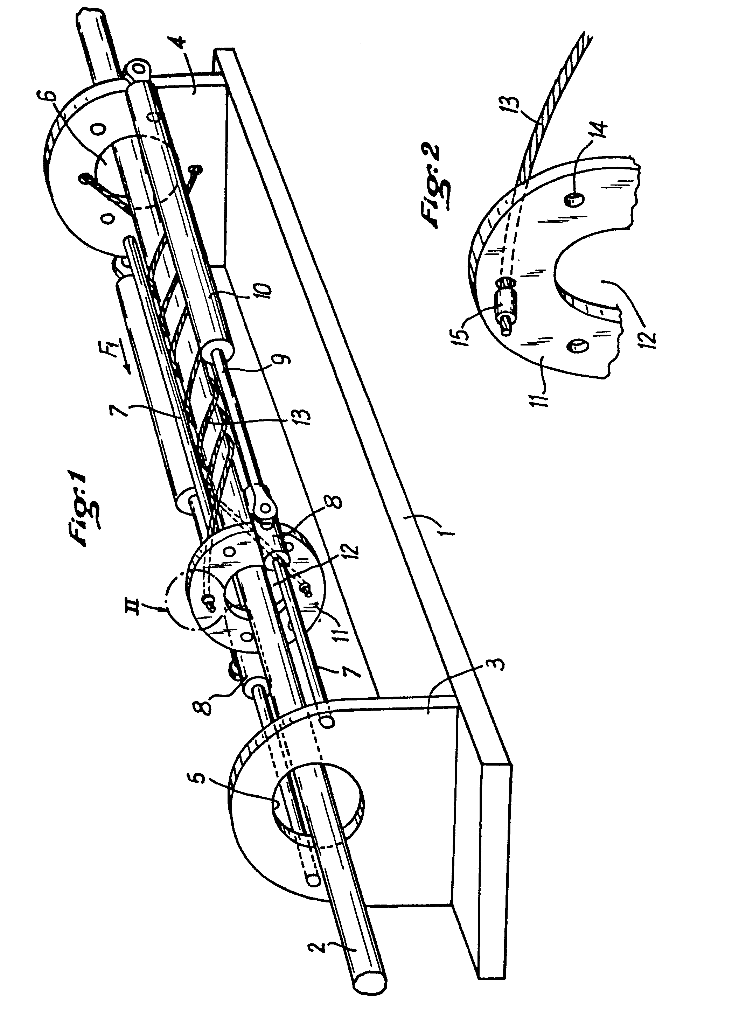

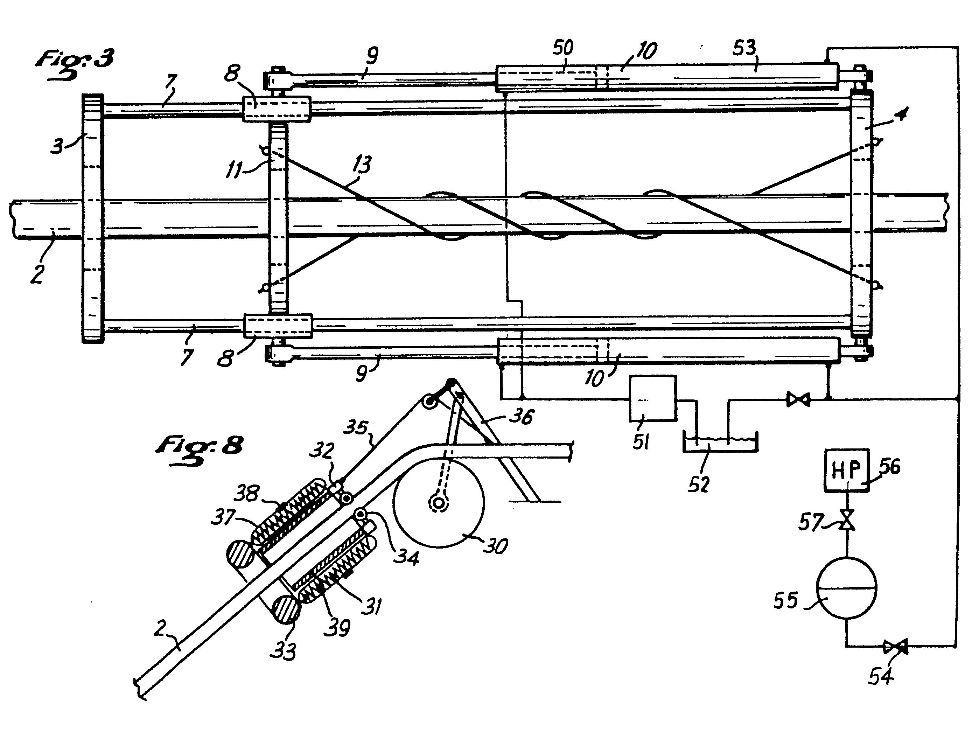

Le dispositif des figures 1 à 3 est monté sur un bâti 1 (non représente à la figure 3) allongé dans la direction du défilement F1 de l'élément allongé 2. Ce bâti porte une ferrure 3 à son extrémité aval et une ferrure 4 à son extrémité amont, munie chacune d'une ouverture 5 et 6 respectivement, au travers desquelles passe l'élément 2. Les ferrures 3 et 4 sont disposées perpendiculairement au bâti 1 et à la direction F1.

Deux tiges 7 sont disposées entre les ferrurès 3 et 4 parallèlement à la direction F1 et font office de rails pour des chariots 8 se présentant sous la forme de manchons coulissant sur les tiges 7. Les manchons 8 sont reliés aux tiges 9 de deux vérins 10 montés sur la ferrure 4 pour déplacer ces manchons le long des tiges 7.

Les deux manchons 8 portent par ailleurs, entre les tiges 7, un châssis annulaire 11 présentant un orifice central 12 traversé également par l'élément 2 et sur lequel les premières extrémités de câble 13 sont montées dans des trous 14 et retenues par des manchons 15.

Les autres extrémités des câbles 13 sont retenues, par exemple de la même manière, ou encore de manière démontable, sur la ferrure 4 qui fait ainsi office de deuxième châssis fixe. Du côté de ces autres extrémités, des organes élastiques peuvent être prévus entre les arrêts de câbles 13 et la ferrure 4.

Dans les figures 1 à 3, seuls deux des câbles 13 sont représentés enroulés dans le même sens autour de l'élément 2. En fait, le nombre de câbles à utiliser dépend de la force de blocage que l'on souhaite obtenir. Les différents câbles peuvent être tous enroulés dans le même sens ou dans les deux sens, ce que présente l'avantage dans ce dernier cas d'annuler les forces de rotation ralatives entre le châssis 11 et le châssis 4.

Les chambres 50 des vérins 10, situées du côté des tiges 9, sont reliées à une pompe 51 pour leur alimentation en fluide hydraulique provenant d'une réserve 52.

L'autre chambre 53 des vérins est reliée par l'intermédiaire d'une vanne à ouverture rapide 54 à un réservoir hydropneumatique 55. La mise en pression du réservoir 55 est réalisée à partir d'une bouteille de gaz haute pression 56 par l'intermédiaire d'une vanne 57.

Le remplissage du circuit hydraulique s'effectue à partir de la réserve 52 par l'intermédiaire d'une vanne 58.

Pour permettre le défilement de l'élément 2, il suffit de rapprocher suffisamment le châssis 11 du châssis 4 à l'aide de la pompe 51 et des vérins 10, de manière que les câbles 13 entourent les éléments 2 de façon lâche. On comprime ainsi l'air contenu dans le réservoir 55 ce qui a pour effet d'emmagasiner de l'énergie. Pour obtenir le blocage du défilement, on déplace rapidement le châssis 11 dans le sens de la flèche F1 à l'aide des vérins 10 en ouvrant la vanne 54. On provoque ainsi un serrement de l'élément 2 par les câbles 13 et par conséquent un blocage de cet élément. La pression dans le réservoir 55 détermine d'une part la vitesse à laquelle le châssis 11 est projeté à l'écart du châssis 4, et d'autre part la force résiduelle s'exerçant sur l'extrémité aval des câbles 13 après blocage.

La vitesse précitée doit être du même ordre ou supérieure à la vitesse de défilement de l'élément 2 de manière à éviter l'endommagement de ce dernier par les câbles 13. La force résiduelle s'exerçant sur l'extrémité aval de ce dernier, doit être suffisante, en fonction de l'effort de traction exercé par l'élément 2, pour maintenir ce dernier après son blocage.

L'accumulateur d'énergie constitué par le réservoir 55 permet par conséquent non seulement le maintien statique de l'élément 2 lorsque ce dernier est bloqué, mais également un fonctionnement dynamique permettant le blocage de l'élément 2 en cours de défilement grâce à une vitesse suffisante d'écartement entre les châssis 4 et 11.

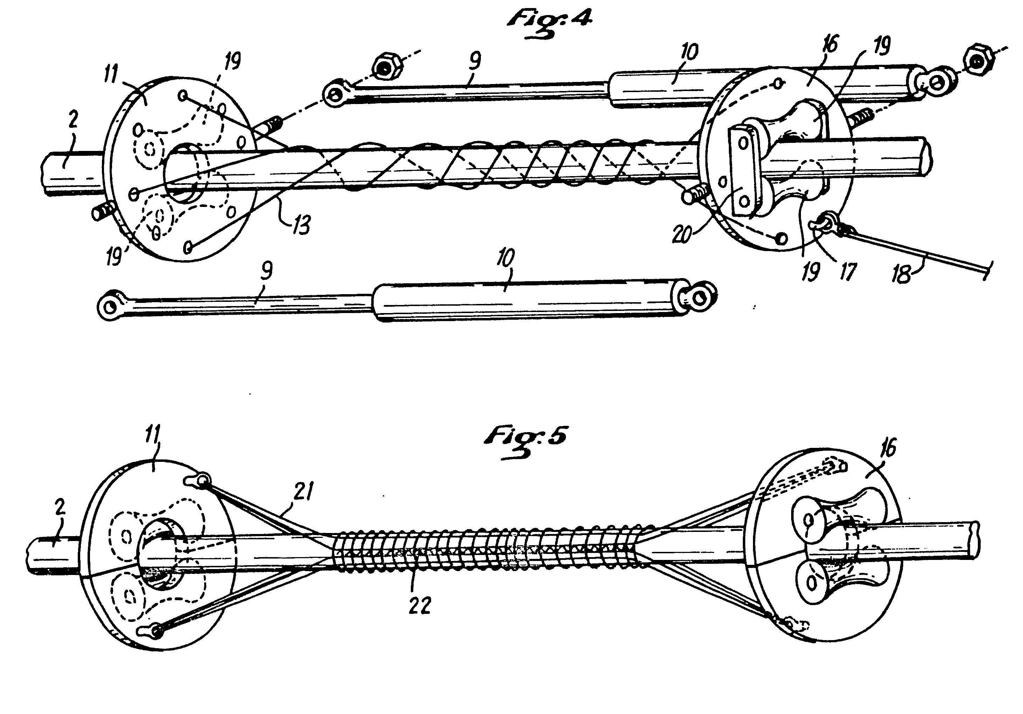

Dans les autres modes de réalisation représentés dans les figures 4 à 7, les organes similaires ont reçu les mêmes références.

Dans le mode de réalisation représenté à la figure 4, le bâti 1, la ferrure 3 ainsi que les tubes 7 et leur manchon 8 ont été supprimés. Le circuit hydraulique a été conservé, mais non représenté.

Les tiges 9 des vérins 10 sont alors montés sur le châssis aval 11 alors que les corps des vérins 10 sont montés sur un châssis amont 16 similaire au châssis 11. Le châssis 16 comprend toutefois des moyens 17, par exemple un anneau, permettant de le fixer à un moyen de retenue 18 lui-même relié à une structure fixe quelconque.

Les châssis 11 et 16 comportent maintenant chacun deux galets 19 en forme de diabolo, montés de part et d'autre de l'ouverture centrale des châssis 11 et 12 sur des brides 20 fixés à ces châssis.

Le dispositif est donc, dans le cas présent, entièrement monté flottant sur l'élément à freiner 2 par l'intermédiaire des châssis 11 et 16 eux-mêmes portés sur l'élément 2 par les galets 19.

En variante, le dispositif pourrait n'être monté que partiellement flottant, le châssis amont 16 étant fixé à un bâti comme le châssis 4 de la figure 1, et le châssis aval 11 étant porté par l'élément 2.

Le fonctionnement du dispositif est le même que décrit précédemment en référence aux figures 1 à 3, à savoir que les châssis 11 et 16 sont rapprochés par actionnement de la pompe 51 pour permettre le défilement de l'élément 2, et sont éloignés à l'aide des vérins 10 par ouverture de la vanne 54 pour obtenir le blocage.

Le dispositif représenté à la figure 5 est identique à la figure 4 (les vérins et le circuit hydraulique n'ont pas été représentés) à ceci près que les câbles 13 ont été remplacés par une chaussette de retenue 21 réalisée de façon connue sous la forme d'une nappe de fils tissés, repliée sur elle-même et cousue à l'aide d'une couture 22.

Dans ce mode de réalisation, les châssis 11 et 16 sont de préférence réalisés sous la forme de demi disque assemblés par tout moyen convenable afin de faciliter l'installation du dispositif sur l'élément 2.

Le dispositif de la figure 5 fonctionne de manière identique à celui de la figure 4.

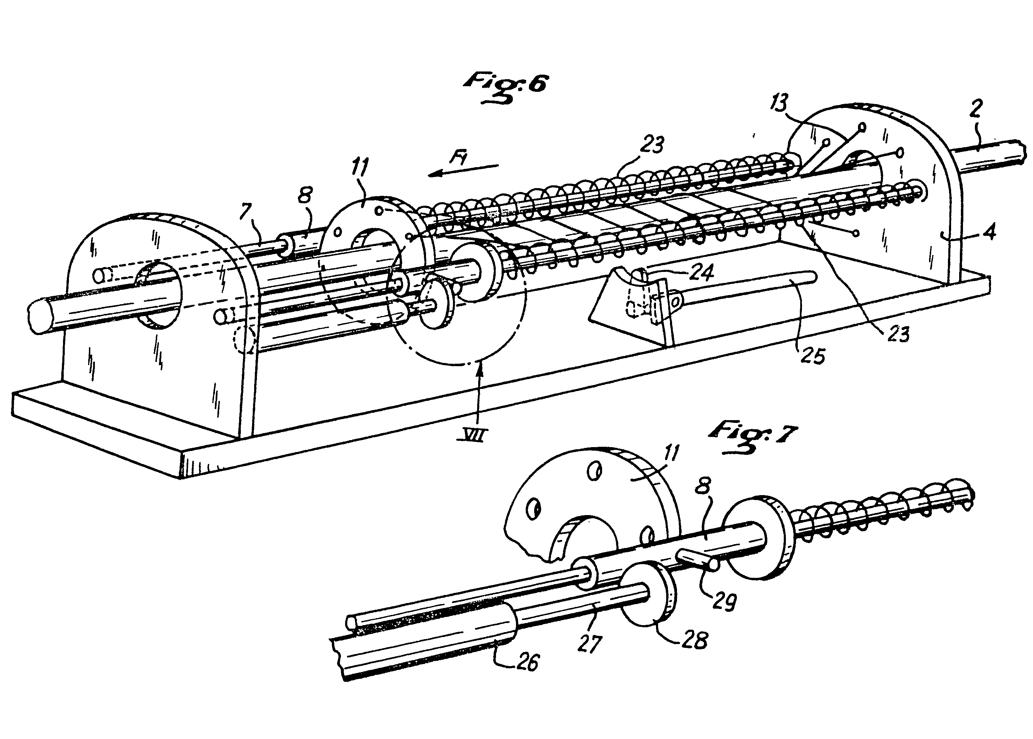

Le dispositif des figures 6 et 7 est similaire à celui des figures 1 à 3 mais les vérins 10 sont, dans ce mode de réalisation, remplacés par des ressorts de compression 23 disposés sur les tubes 7 entre le châssis mobile 11 et le châssis fixe 4 pour provoquer l'éloignement du châssis mobile par rapport au châssis fixe.

Un verrou 24 susceptible d'être commandé par une tige de commande 25 permet de verrouiller le châssis mobile 11 dans sa position rapprochée du châssis fixe 4, dans laquelle les câbles 13 n'exercent pas d'efforts de blocage sur l'élément 2.

Des vérins 26 sont montés sur la ferrure 3 et ont à l'extrémité de leur tige 27, un poussoir 28 susceptible de coopérer avec un doigt 29 monté sur le manchon 8, pour repousser le châssis mobile 11 dans la direction opposée à la direction de défilement F1, de manière à amener le châssis mobile 11 dans la position où il est verrouillé à l'aide du verrou 24.

Une fois le châssis mobile 11 verrouillé, les tiges 27 sont rétractées dans les vérins 26 et l'élément 2 peut défiler librement. En cas de nécessité, une action de commande est exercée sur la tige 25, ce qui a pour effet de déverrouiller le verrou 24, de sorte que les ressorts 23 propulsent le châssis 11 dans la direction de défilement F1, à une vitesse du même ordre de grandeur que la vitesse de défilement, ce qui provoque un serrement de câbles 13 autour de l'élément 2 et bloque ce dernier.

Ici, le ressort joue donc le rôle de moteur et à la fois celui d'accumulateur d'énergie, les vérins 26 jouant un rôle équivalent à celui de la pompe 51 dans le mode de réalisation de la figure 1.

Dans le mode de réalisation à la figure 8, l'élément 2 est dévidé par exemple à partir d'un navire et passe sur un tambour 30.

Une chaussette de retenue 31 est montée à son extrémité amont sur un châssis 32 et à son extrémité aval sur un châssis 33.

Le châssis amont est muni de galets 34 similaires à ceux décrits en référence à la figure 4, et relié au navire par l'intermédiaire d'un câble 35 relié à une structure de support 36.

La chaussette de retenue 31 est tassée sur elle-même dans le sens longitudinal (ou repliée en zigzags comme représentée à la figure 8), et maintenue dans cette configuration par le fait que des câbles 37 formant des boucles susceptibles d'être très rapidement détachées, par exemple à l'aide de boulons explosifs 38, maintiennent les châssis amont et aval reliés. La chaussette de retenue ainsi repliée est engagée autour d'un manchon 39 rigide solidaire du châssis 33 et agencé de telle sorte qu'il empêche la chaussette de retenue de venir au contact de l'élément 2 en fonctionnement normal.

Lorsque le besoin s'en fait sentir, les câbles 37 sont relâchés de sorte que la chaussette de retenue 31 se détend sous l'effet de l'action de la pesanteur qui entraîne le châssis 33 et le manchon 39 à grande vitesse vers l'aval. Ainsi la chaussette de retenue en se dévidant vient enserrer l'élément 2 et provoquer le blocage de ce dernier.

Comme les ressorts dans le cas précédent, le châssis 33 et le manchon 39 jouent à la fois le rôle de moteur et d'accumulateur d'énergie, ici d'énergie potentielle de gravitation.

En variante, la chaussette de retenue 31 peut être remplacée par deux nappes de câbles enroulés en sens inverses. Dans ce cas, chaque nappe peut être disposée sur un manchon, les manchons étant disposés concentriquement.

Dans le mode de réalisation représenté à la figure 9, deux patins 40 et 41 sont intercalés entre l'élément 2 et les câbles 13.

L'élément 2 a ici une section elliptique et les patins 40 et 41 ont une forme telle que l'ensemble par l'élément 2 et les patins possède une section sensiblement circulaire. On évite ainsi, lors du serrage du câble 13, un écrasement ou un flambage de l'élément 2 dans le sens de son grand axe.

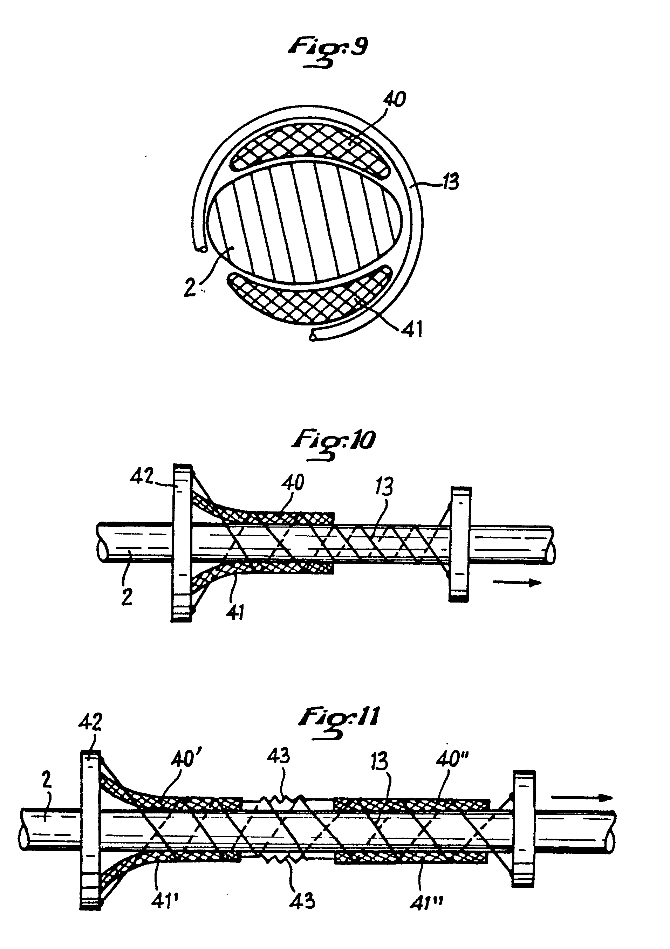

A la figure 10, les patins 40 et 41 sont représentés fixés au châssis amont 42, mais de longueur inférieure aux câbles 13 dans sa position déployée représentée à la figure. La partie aval des câbles 13 est par conséquent au contact de l'élément 2 et peut assurer ainsi la tension de ces câbles. Par contre, l'essentiel de l'effort de blocage, qui se produit dans la partie amont des câbles 13, est repris par les patins 40 et 41 qui le transmettent au châssis 42, allégeant ainsi les contraintes exercées sur les câbles 13.

Il est aussi possible d'utiliser des patins 40', 40'' et 41', 41'' ayant sensiblement la même longueur que les câbles 13 une fois déployés, mais alors ces patins sont réalisés en deux parties reliées dans le sens longitudinal par des moyen élastiques 43. Dans ces conditions, les patins 40'' et 41'' assurent la mise en tension du dispositif alors que les patins 40' et 41' assurent la transmission de l'effort de blocage au châssis amont 42.

## Revendications

1. Dispositif pour bloquer le défilement d'un élément allongé tel qu'un tuyau ou un câble, comprenant au moins un organe (13) tel qu'un câble susceptible d'être enroulé en hélice autour de l'élément à bloquer (2) et ayant ses extrémités montées chacune sur un châssis de support (4, 11, 16) et des moyens moteurs pour provoquer l'éloignement respectif des deux châssis dans une direction parallèle au défilement, caractérisé par le fait que lesdits moyens moteurs comprennent au moins un accumulateur d'énergie (55, 23, 33) susceptible de les actionner, de sorte qu'au moment où ledit organe vient en prise avec l'élément à bloquer, la vitesse de la partie avant de cet organe soit du même ordre ou supérieure à celle de l'élément.

2. Dispositif selon la revendication 1, caractérisé par le fait que lesdits moyens moteurs comprennent des vérins (10) disposés entre les deux châssis, l'accumulateur d'énergie comprenant au moins un réservoir d'air sous pression (55) relié auxdits vérins.

3. Dispositif selon la revendication 1, caractérisé par le fait que lesdits moyens moteurs et accumulateurs d'énergie comprennent des moyens élastiques (23) agencés pour écarter les deux châssis, un verrou (24) étant prévu pour verrouiller les châssis dans une position où ils sont rapprochés l'un de l'autre, et des vérins (26) étant montés entre les châssis pour les rapprocher l'un de l'autre contre l'action des moyens élastiques.

4. Dispositif selon la revendication 1, caractérisé par le fait que les moyens moteurs et accumulateurs d'énergie sont constitués par l'action de la pesanteur sur le châssis aval.

5. Dispositif selon la revendication 1, caractérisé par le fait que l'un desdits châssis (4) est monté fixe sur un bâti sur lequel est également monté au moins un rail de guidage (7) sensiblement parallèle à la direction de défilement, et que l'autre châssis (11) est monté solidaire d'un chariot (8) susceptible de coulisser sur ledit rail.

6. Dispositif selon la revendication 1, caractérisé par le fait qu'au moins le châssis aval (11) dans le sens du défilement est porté par l'élément à bloquer, des moyens étant prévus pour retenir dans le sens du défilement le châssis amont.

7. Dispositif selon la revendication 6, caractérisé par le fait que ledit châssis porté par l'élément à bloquer est monté sur au moins un galet (19) agencé pour coopérer avec ledit élément à bloquer.

8. Dispositif selon l'une quelconque des revendications 1 à 7, caractérisé par le fait que lesdits châssis sont des châssis annulaires au travers desquels passe l'élément à bloquer.

9. Dispositif selon l'une quelconque des revendications 1 à 8, caractérisé par le fait qu'il comprend une pluralité d'éléments tels que des câbles enroulés dans les deux sens autour de l'élément à bloquer.

10. Dispositif selon l'une quelconque des revendications 1 à 9, caractérisé par le fait que les éléments tels que des câbles sont constitués par une chaussette de retenue (22).

11. Dispositif selon l'une quelconque des revendications 1 à 10, caractérisé par le fait qu'un matériau souple est interposé entre l'organe (13) et l'élément à bloquer (2).

12. Dispositif selon l'une quelconque des revendications 1 à 11, caractérisé par le fait que lesdits châssis sont réalisés en au moins deux parties séparables.

13. Dispositif selon l'une quelconque des revendications 1 à 12, caractérisé par le fait qu'il comprend au moins un patin monté sur le bâti et disposé entre l'élément à bloquer et l'organe tel qu'un câble.

14. Dispositif selon la revendication 13, caractérisé par le fait que ledit patin possède une longueur inférieure à la longueur dudit organe une fois déployé.

15. Dispositif selon la revendication 13, caractérisé par le fait que ledit patin est réalisé en au moins deux parties longitudinalement espacées et reliées par un élément élastique.

16. Dispositif selon l'une quelconque des revendications 13 à 15, caractérisé par le fait que ledit patin a une section complémentaire de celle de l'élément à bloquer, par rapport à un cercle.

## Patentansprüche

1. Vorrichtung zum Blockieren des Ablaufens eines langgestreckten Elements, wie eines Rohres oder Kabels, bestehend aus wenigstens einem Organ (13), z.B. einem Kabel, das schraubenlinienförmig um das zu blockierende Element (2) wickelbar ist und dessen Enden an je einen Tragrahmen (4, 11, 16) montiert sind, wobei Antriebe vorgesehen sind, um das Auseinanderrücken der beiden Rahmen in einer Richtung parallel zur Ablaufrichtung zu bewirken, dadurch gekennzeichnet, dass die Antriebe wenigstens einen Energiespeicher (52, 23, 33) aufweist, der sie so betätigt, dass im Augenblick, wo das Organ auf dem zu blockierenden Element zum Angriff kommt, die Geschwindigkeit des vorderen Teiles dieses Organs in der gleichen Grössenordnung wie oder höher als die des Elementes ist.

2. Vorrichtung nach Anspruch 1, dadurch gekennzeichnet, dass die Antriebe aus Winden (10) bestehen, die zwischen den beiden Rahmen angeordnet sind, und dass der Energiespeicher wenigstens ein Druckluftreservoir (55) aufweist, das an die Winden angeschlossen ist.

3. Vorrichtung nach Anspruch 1, dadurch gekennzeichnet, dass die Antriebe und der Energiespeicher elastische Mittel (23) aufweisen, die so ausgestaltet sind, dass sie die beiden Rahmen auseinanderrücken, dass ein Riegel (24) vorgesehen ist, um die Rahmen in einer zueinander genäherten Position zu verriegeln, und dass Winden (26) zwischen den Rahmen montiert sind, um diese gegen die Wirkung der elastischen Mittel einander zu nähern.

4. Vorrichtung nach Anspruch 1, dadurch gekennzeichnet, dass die Antriebe und die Energiespeicher durch Schwerkraftwirkung auf den in Ablaufrichtung abwärts liegenden Rahmen gebildet werden.

5. Vorrichtung nach Anspruch 1, dadurch gekennzeichnet, dass der Rahmen (4) fest auf einem Gestell montiert ist, auf dem wenigstens eine Führungsschiene (7) montiert ist, die im wesentlichen parallel zur Ablaufrichtung verläuft, und dass der andere Rahmen (11) fest auf einem Wagen montiert ist, der auf der Führungsschiene verschiebbar ist.

6. Vorrichtung nach Anspruch 1, dadurch gekennzeichnet, dass wenigstens der in Ablaufrichtung abwärts liegende Rahmen (11) durch das zu blockierende Element getragen wird, und dass Mittel vorgesehen sind, die den zur Ablaufrichtung aufwärts liegenden Rahmen festhalten.

7. Vorrichtung nach Anspruch 6, dadurch gekennzeichnet, dass der von dem zu blockierenden Element getragene Rahmen auf wenigstens einer Rolle (19) montiert ist, die so ausgestaltet ist, dass sie mit dem zu blockierenden Element zusammenwirkt.

8. Vorrichtung nach einem der Ansprüche 1 bis 7, dadurch gekennzeichnet, dass die Rahmen ringförmig ausgebildet sind und sich das zu blockierende Element durch sie hindurch erstreckt.

9. Vorrichtung nach einem der Ansprüche 1 bis 8, dadurch gekennzeichnet, dass sie eine Mehrzahl von Organen, z.B. Kabel, aufweist, die in beiden Richtungssinnen um das zu blockierende Element aufgewickelt sind.

10. Vorrichtung nach einem der Ansprüche 1 bis 9, dadurch gekennzeichnet, dass die Organe, z.B. Kabel, aus einem strumpfförmigen Halter (22) bestehen.

11. Vorrichtung nach einem der Ansprüche 1 bis 10, dadurch gekennzeichnet, dass ein nachgiebiges Material zwischen dem Blockierorgan (13) und dem zu blockierenden Element (2) eingelegt ist.

12. Vorrichtung nach einem der Ansprüche 1 bis 11, dadurch gekennzeichnet, dass die Rahmen aus mindestens zwei trennbaren Teilen bestehen.

13. Vorrichtung nach einem der Ansprüche 1 bis 12, dadurch gekennzeichnet, dass wenigstens ein auf das Gestell montierter schuhförmiger Aufsatz vorgesehen ist, der zwischen dem zu blockierenden Element und dem Blockierorgan vorgesehen ist.

14. Vorrichtung nach Anspruch 13, dadurch gekennzeichnet, dass der schuhförmige Aufsatz eine Länge aufweist, die geringer ist als die Länge des ausgestreckten Blockierorgans.

15. Vorrichtung nach Anspruch 13, dadurch gekennzeichnet, dass der schuhförmige Aufsatz aus wenigstens zwei Teilen besteht, die in Längsrichtung in Abstand voneinander verlaufen und durch ein elastisches Teil miteinander verbunden sind.

16. Vorrichtung nach einem der Ansprüche 13 bis 15, dadurch gekennzeichnet, dass der schuhförmige Aufsatz einen Abschnitt aufweist, der mit einem Abschnitt des zu blockierenden Elementes in bezug auf einen Kreis komplementär ist.

## Claims

1. A device for blocking an elongated element such as a pipe or cable from running past, including at least one member (13) such as a cable which is capable of being wound in a spiral round the element (2) to be blocked and has each end of it mounted on a supporting frame (4, 11, 16), and driving means for causing the two frames to move apart in a direction parallel with the running movement, characterized by the fact that the said driving means include at least one power accumulator (55, 23, 33) capable of actuating them so that at the moment when the said member comes into engagement with the element to be blocked the speed of the front portion of this member is of the same order as or greater than that of the element.

2. A device as in Claim 1, characterized by the fact that the said driving means comprise jacks (10) arranged between the two frames, the power accumulator comprising at least one reservoir (55) of air under pressure, connected to the said jacks.

3. A device as in Claim 1, characterized by the fact that the said driving means and power accumulators comprise elastic means (23) arranged for moving the two frames apart, a bolt (24) being provided for locking the frames in a position in which they are brought towards one another, and jacks (26) being mounted between the frames for bringing them towards one another against the action of the elastic means.

4. A device as in Claim 1, characterized by the fact that the driving means and power accumulators consist of the action of gravity upon the front frame.

5. A device as in Claim 1, characterized by the fact that one (4) of the said frames is mounted fixed upon a bed upon which there is likewise mounted at least one guiderail (7) substantially parallel with the direction of the running movement, and that the other frame (11) is mounted integral with a carriage (8) capable of sliding along the said rail.

6. A device as in Claim 1, characterized by the fact that at least the frame (11) downstream in the direction of the running movement is carried by the element to be blocked, means being provided for keeping the upstream frame in the direction of the running movement.

7. A device as in Claim 6, characterized by the fact that the said frame carried by the element to be blocked is mounted upon at least one pulley (19) arranged to cooperate with the said element to be blocked.

8. A device as in any one of the Claims 1 to 7, characterized by the fact that the said frames are annular frames through which passes the element to be blocked.

9. A device as in any one of the Claims 1 to 8, characterized by the fact that it comprises a plurality of elements such as cables wound in both directions round the element to be blocked.

10. A device as in any one of the Claims 1 to 9, characterized by the fact that the elements such as cables consist of a retainer sock (22).

11. A device as in any one of the Claims 1 to 10, characterized by the fact that a flexible material is interposed between the member (13) and the element (2) to be blocked.

12. A device as in any one of the Claims 1 to 11, characterized by the fact that the said frames are made in at least two separable parts.

13. A device as in any one of the Claims 1 to 12, characterized by the fact that it includes at least one shoe mounted on the frame and arranged between the element to be blocked and the member such as a cable.

14. A device as in Claim 13, characterized by the fact that the said shoe has a length less than the length of the said member when spread out.

15. A device as in Claim 13, characterized by the fact that the said shoe is made in at least two portions spaced longitudinally and connected by an elastic element.

16. A device as in any one of the Claims 13 to 15, characterized by the fact that the said shoe has a section complementary with that of the element to be blocked, with respect to a circle.

*Fig:1*

*Fig:2*

EP 0 196 962 B1

Fig.3

Fig.8

Fig: 4

Fig: 5

EP 0 196 962 B1

Fig.6

Fig.7

_Fig:9_

_Fig:10_

_Fig:11_